(19) Europäisches Patentamt
European Patent Office
Office européen des brevets

(11) **EP 4 495 885 A1**

(12) **EUROPEAN PATENT APPLICATION**

(43) Date of publication:
**22.01.2025 Bulletin 2025/04**

(21) Application number: **23186841.5**

(22) Date of filing: **20.07.2023**

(51) International Patent Classification (IPC):
**G06T 11/00** (2006.01)       **G01J 3/02** (2006.01)
**G01J 3/50** (2006.01)

(52) Cooperative Patent Classification (CPC):
**G06T 11/00; G01J 3/0272; G01J 3/504;
G06T 11/001**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **X-Rite Europe GmbH
8105 Regensdorf (CH)**

(72) Inventors:
• **Grisins, Pjotrs
8105 Regensdorf (CH)**
• **Gerber, Werner
8105 Regensdorf (CH)**

(74) Representative: **Jonas, Hans-Hermann
X-Rite Europe GmbH
Althardstrasse 70
8105 Regensdorf (CH)**

(54) **METHOD FOR SYNTHESIZING AN IMAGE THAT IS REPRESENTATIVE OF THE APPEARANCE OF A SURFACE UNDER DIFFUSE ILLUMINATION**

(57)     A method for synthesizing a diffuse image (S) that is representative of an appearance of a surface under diffuse illumination, comprising:

a) obtaining at least two directional images (D1, D2, D3) of the surface, each directional image having been acquired along a predefined viewing direction under directional illumination of the surface from a predefined illumination direction;

b) for each directional image, determining a plurality of statistical parameters ($\{A_{1,n,m}\}, \{A_{2,n,m}\}, \{A_{3,n,m}\}$) that are representative of a statistical distribution of the pixel values in the respective directional image;

c) predicting a plurality of probability distribution parameters ($\{A_{P,n,m}\}$), the probability distribution parameters being representative of a predicted probability distribution function of the pixel values in the diffuse image, using the statistical parameters associated with the at least two directional images as predictors; and

d) determining the pixel values of the diffuse image based on sampling from the predicted probability distribution function.

FIG. 4

**Description**

TECHNICAL FIELD

The present invention relates to a method for synthesizing a diffuse image that is representative of the appearance of a surface under diffuse illumination, to a corresponding computer program, and to an imaging spectrophotometer that is configured to carry out the method.

PRIOR ART

The visual impression of an actual material or object in an environment under defined illumination and viewing conditions is referred to in the relevant specialist circles as "appearance". Appearance is known to be the result of a complex interaction of different factors:

- geometrical factors, which define the scene, the object and the illumination and viewing conditions;
- optical properties, which describe the interaction between light and the material of the viewed object; and
- physiological factors, which influence the perception (response) of the human visual system.

In many industrial applications, it is desired to carry out measurements for characterizing the appearance of a material or object. In such measurements, a plurality of optical properties of the material or object are determined under one or more sets of illumination and viewing conditions. A large variety of instruments have been proposed for this purpose, with varying degrees of complexity.

One exemplary application is the repair of automobiles. When a damaged automobile part is to be replaced by a new part in a body shop, the new part needs to be coated with a paint such that its visual appearance exactly matches the visual appearance of the original part. The same is true if a damaged part needs to be repainted. To this end, it is desirable to determine the visual appearance of the original part by measurements and to define, based on the measurements, a paint recipe that will achieve a close match to the appearance of the original part.

Automobile paints often comprise effect pigments that cause gonioapparent behavior, i.e., they cause an appearance that strongly depends on the illumination and viewing directions. For instance, special effect flake pigments may cause a sparkle effect that strongly changes with the illumination or viewing direction. As another example, interference pigments may cause goniochromism, i.e., a gradual change of color as the illumination or viewing direction changes. Effect pigments are also used in other materials, for instance, in plastic materials of many household articles.

Various industrial standards each propose suitable sets of measurement geometries for characterizing materials that comprise effect pigments. ASTM E2194-14 (2017) defines a set of at least three measurement geometries for materials that comprise metallic effect pigments. ASTM E2539-14 (2017) defines additional measurement geometries for characterizing materials that comprise interference pigments.

Effect pigments may produce not only gonioapparent color, but also local variations in the surface of the viewed object, which are called "texture". Two aspects of texture can be distinguished: visual texture characterizes spatial variation of color and reflectance, while surface texture characterizes the three-dimensional topography of a surface on a scale which the human eye can resolve. Visual texture is generally different under directional illumination, such as for example direct sunlight, and diffuse illumination, such as for example overcast skies. Directional illumination may produce a pattern of very bright "sparkle spots" which are caused by direct reflections at the pigment flakes in the uppermost layer of paint. This effect is usually referred to as sparkle, glint, glitter or micro-brilliance. Diffuse illumination produces a local variation in brightness with much lower contrast, which is usually referred to as graininess, diffuse coarseness, image grain or granularity.

For characterizing paint coatings that comprise effect pigments, handheld multi-angle imaging spectrophotometers are known, which combine multi-angle color measurements with image-based texture measurements. One example is the MA-Tx series of measuring devices available from X-Rite, Inc., Grand Rapids, MI, USA. The system architecture of the MA-Tx series is described in US20140152990A1. The measuring device is configured to carry out measurements of a measurement spot on a sample surface, the measurement spot defining a measurement plane. The device includes a mechanical arc structure defining a system plane. The arc structure holds up to seven directional illumination systems for illuminating the measurement spot from different angles within the system plane, and it holds two detector systems for picking up light that has been reflected from the measurement spot at anormal angles of 15° and 45° within the system plane. In addition, a diffuse illumination system is provided to illuminate the measurement spot from a range of directions at large angles relative to the system plane. The detector system at the anormal angle of 45° is realized as a spectral pick-up system which couples the collected light into a fiber and then into a spectral analyzer. The detector system at the anormal angle of 15° is realized as a multiplexed optical system combining a spectral pick-up channel and an RGB color camera at the same viewing angle. The same light sources are shared for the spectral measurements and for image acquisition. The device can thus quickly and accurately evaluate and verify the color, sparkle, and graininess characteristics of effect finishes.

The measuring device disclosed in US20140152990A1 is able to generate images of the measurement spot under diffuse illumination, using the diffuse illumination system and the RGB color camera at the anormal angle of 15°, this geometry being called an "r15d" measurement geometry. In practice, the resulting images are often not used for carrying out quantitative determinations of texture characteristics. Instead, they are often used only for preview purposes, providing a realistic visual impression of the measurement spot under diffuse illumination.

However, not all multi-angle imaging spectrophotometers comprise a diffuse illumination system. It is currently not possible to provide a realistic preview of a measurement spot under diffuse illumination with devices that lack a diffuse illumination system.

SUMMARY OF THE INVENTION

It is an object of the present invention to provide a method that is able to provide a realistic visual impression of a measurement spot under diffuse illumination without requiring a diffuse illumination system.

This object is achieved with a method according to claim 1. Further embodiments of the invention are laid down in the dependent claims.

In a first aspect, the invention provides a method for synthesizing an image that is representative of an appearance of a surface under diffuse illumination. In the present disclosure, an image obtained under diffuse illumination is called a "diffuse image". The diffuse image comprises an array of pixels, which in the present disclosure are called "diffuse image pixels". Each diffuse image pixel has at least one pixel value, which in the present disclosure is called a "diffuse image pixel value". For example, if the diffuse image is a greyscale image, each diffuse image pixel may have exactly one pixel value. If the diffuse image is a color image, each diffuse image pixel may have three or more pixel values, each pixel value being a color value along a color coordinate of a suitable color space or being a spectral value.

The method comprises:

a) obtaining at least two directional images of a measurement spot on the surface, each directional image having been acquired along a viewing direction under directional illumination of the measurement spot from an illumination direction, the illumination and/or viewing directions being different between the at least two directional images, each directional image comprising an array of directional image pixels, each directional image pixel having at least one directional image pixel value;

b) for each directional image, determining a plurality of statistical parameters, the statistical parameters being representative of a statistical distribution of the directional image pixel values in the respective directional image;

c) predicting a plurality of probability distribution parameters, the probability distribution parameters being representative of a predicted probability distribution function of the diffuse image pixel values, using the statistical parameters associated with the at least two directional images as predictors;

d) determining the diffuse image pixel values based on sampling from the predicted probability distribution function.

In this method, the diffuse image is synthesized based on at least two images that have been acquired under directional illumination. In the present disclosure, these images are called "directional images". A measurement spot may have very different appearances under directional illumination and under diffuse illumination. For example, for effect paints, the measurement spot may exhibit strong sparkle effects, which may strongly depend on the illumination and observation directions, but may be absent or much reduced under diffuse illumination. It may therefore be difficult to directly predict the appearance of a measurement spot under diffuse illumination based on its appearance under directional illumination. The proposed method is based on the realization that despite the different appearances of a measurement spot under different illumination conditions, there may be a strong correlation between certain statistical properties of the pixel value histograms of directional and diffuse images. The invention proposes predicting the statistical properties of the diffuse image and determining the diffuse image pixel values in such a manner that their actual statistical properties approximately match the predicted statistical properties. This is achieved by determining a predicted probability density function (PDF) of the diffuse image pixel values and sampling from that probability density function by a suitable sampling method.

In advantageous embodiments, determining the statistical parameters comprises fitting a PDF that has one maximum and two independent "heavy" tails that decay towards zero over a longer range than a Gaussian distribution to the distribution of directional image pixel values in the respective directional image, and determining the statistical parameters based on the thus-obtained PDF. The PDF may in particular be the PDF of Johnson's SU distribution. Experiments have shown that Johnson's SU distribution generally well reproduces the most important characteristics of the pixel value histograms of directional and diffuse images.

Advantageously, at least four statistical parameters are determined for each directional image. If the directional images are color images, being defined in a color space having three or more dimensions, this is preferably done separately for each dimension of the color space. Notably, Johnson's SU distribution is defined by four parameters.

It may be advantageous to determine the statistical parameters as percentiles of a cumulative density function (CDF) representing the statistical distribution of the directional image pixel values in the respective directional image. In particular, the statistical parameters can be determined as percentiles of the CDF that corresponds to the PDF that has been fitted to the distribution of the directional image pixel values in the respective directional image. Experiments have shown that specifying the statistical parameters as percentiles of a CDF may increase robustness of the prediction algorithm. Such percentiles will in the following also be called "anchors".

The diffuse image pixel values are based on sampling from the predicted probability distribution function. If only random sampling from the predicted PDF is used to determine the diffuse image pixel values, without any further image processing, the pixel values of adjacent pixels will be statistically uncorrelated. This may not properly reflect reality, since normally the camera system used for capturing images of the measurement spot has finite resolution, and therefore actual diffuse images will generally exhibit short-range spatial correlations between the pixel values of different pixels. Also other effects can cause spatial correlations.

In order to take the spatial correlations into account, determining the diffuse image pixel values may comprise:

d1) synthesizing a pre-image having a plurality of pre-image pixels, wherein for each pre-image pixel, a pre-image pixel value is calculated, wherein calculation of the pre-image pixel value comprises random sampling from the predicted probability distribution function; and

d2) determining the diffuse image pixel values from the pre-image pixel values in such a manner that short-range spatial correlations between the diffuse image pixel values are induced.

In this approach, a pre-image is synthesized, whose pixel values may be essentially uncorrelated, and the diffuse image is determined from the pre-image by an image processing operation that induces short-range correlations between neighboring pixels.

Specifically, determining the diffuse image pixel values from the pre-image pixel values may comprise one or both of:

resizing the pre-image or an image derived therefrom by a resizing factor to obtain the diffuse image; and/or

applying a blurring operation to the pre-image or an image derived therefrom to obtain the diffuse image.

In this manner, the diffuse image pixel values will generally have increased short-range spatial correlations as compared to the pre-image pixel values.

The blurring operation may comprise convolving the pre-image with a point spread function, in particular, with a circular (isotropic) point spread function. In this manner, diffraction effects in the camera system of the measuring device are emulated.

In some embodiments, the range of spatial correlations between the pixels in actual diffuse images may be known beforehand. In other embodiments, this range may be unknown. In such embodiments, it may be desirable to predict the spatial correlations in the synthesized diffuse image directly from the directional images. To this end, the method may comprise:

for each of the directional images, determining at least one spatial autocorrelation parameter; and
taking the spatial autocorrelation parameters of the directional images into account when determining the diffuse image pixel values,
wherein the method preferably comprises predicting a spatial autocorrelation parameter of the diffuse image and determining the diffuse image pixel values using said spatial autocorrelation parameter of the diffuse image.

In particular, the spatial autocorrelation parameters of the directional image pixels may be additional input parameters of the prediction algorithm for predicting the probability distribution parameters of the diffuse image pixel values, and the output values of the prediction algorithm may comprise the spatial autocorrelation parameter of the diffuse image, e.g., in the form of a scaling factor or a blurring parameter, e.g., in the form of a length scale parameter of a point spread function that is convolved with the pre-image.

In some embodiments, the directional images and the diffuse images may each have only one pixel value per pixel, e.g., they may be greyscale images, the pixel value representing intensity or brightness of the pixel. In other embodiments, each diffuse image pixel may have at least three diffuse image pixel values, each diffuse image pixel values being a color value in a color space having at least three color space dimensions. Also each directional image pixel may have at least three directional image pixel values, each directional image pixel value being a color value in said color space. In this case, steps a) and b) of the above-described method may be carried out separately for each of the color space dimensions. The prediction step c) is advantageously carried out for all color space dimensions together, using the statistical parameters of all color space dimensions as predictors. The prediction step c) may then accordingly provide probability distribution parameters of the diffuse image pixel values for all color space dimensions.

If the directional images are color images having at least three color values, they are often acquired in a color space that is a trichromatic color space, e.g., RGB, whose color values represent the intensities of three different colors. In such a color space, the directional image pixel color values may exhibit strong correlations between the different color space dimensions. It is then advantageous to transform the directional images into a second color space in which the directional image pixel color values have reduced correlations between different color space dimensions as compared to the original color space. In particular, it is advantageous if the second color space has a hue dimension, a saturation dimension and an intensity or brightness dimension. In particular, the color space may be a well-known HSV or HSL color space, for which a transformation from RGB can be carried out in a particularly efficient manner.

The method may comprise carrying out a correlation analysis, e.g., a principal component analysis, of the directional image pixel values along the different color space dimensions in the first color space to determine the second color space as a color space that minimizes correlations between the directional image pixel color values along different color space dimensions of the second color space.

Unwanted correlations between the directional image pixel values along different color space dimensions may still exist even in a correlation-minimizing color space. The correlations may be particularly pronounced if sparkles are present in the directional images. It may therefore be advantageous to separate sparkle pixels from background pixels and to treat the background pixels and the sparkle pixels separately. In this way, unwanted correlations between the color space dimensions may be further reduced, and a more realistic result may be achieved. Sparkle pixels may be determined, e.g., by a simple thresholding algorithm that identifies pixels above a certain intensity threshold as sparkle pixels, or by more complex algorithms such as edge detection algorithms.

More specifically, the method may comprise determining sparkle pixels in the directional images, the sparkle pixels being representative of sparkle spots, and removing the sparkle pixels from the directional images to obtain directional background images. Steps a) to d) may then be carried out using only the directional background images to obtain a synthesized diffuse background image. Optionally, simulated sparkle spots may finally be inserted into the diffuse background image to obtain the final diffuse image. The simulated sparkle spots may likewise be obtained by applying steps a) to d) to the sparkle pixels of the directional images. In step c), it may then be advantageous to employ a common prediction algorithm that has among its inputs the statistical parameters of both the directional background images and the sparkle spots in the directional images, and has among its outputs the probability distribution parameters for both the diffuse background image and the simulated sparkle spots.

The prediction algorithm that is employed for determining the probability distribution parameters may be a machine-learning algorithm that has been trained using a training data set comprising, for each of a plurality of surfaces, statistical parameters of at least two measured directional images and of one measured diffuse image. For each surface, the statistical parameters of the measured directional images act as predictors, while the statistical parameters of the measured diffuse image act as target values. The statistical parameters may be determined as defined above, e.g., as percentiles of a CDF ("anchors"). The machine-learning algorithm may be, for example, a regression algorithm, in particular, a regression gradient boosting algorithm.

In another aspect, the present invention provides a computer program comprising instructions which, when the program is executed by a computer, cause the computer to carry out the method of the present disclosure. The computer program may be provided on a non-volatile computer-readable data carrier having stored thereon the computer program.

The present invention further provides an imaging spectrophotometer comprising:

at least one directional light source for illuminating a measurement spot on a sample surface from at least one predefined illumination direction;
at least one image detector for acquiring images of the measurement spot along a predefined viewing direction; and
processing circuitry configured to carry out the method of the present disclosure.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1    shows a perspective view of a multi-angle spectrophotometer according to the prior art;
Fig. 2    shows a perspective view of the measurement array of the multi-angle spectrophotometer in Fig. 1;
Fig. 3    shows an illustration of possible measurement geometries in the handheld measuring device in Fig. 1;
Fig. 4    shows schematic flow chart illustrating an embodiment of a method according to the present disclosure;

Fig. 5    shows three diagrams illustrating typical distributions of pixel values in the HSV color space;

Fig. 6    shows a diagram illustrating Johnson's SU distribution for three different parameter sets;

Fig. 7    shows a diagram illustrating the determination of percentiles of a cumulative density function;

Fig. 8    shows an image patch illustrating the detection of sparkle spots in an image; and

Fig. 9    shows a schematic hardware-oriented block diagram of a multi-angle spectrophotometer according to the present disclosure.

DESCRIPTION OF PREFERRED EMBODIMENTS

Definitions

In the present disclosure, references in the singular may also include the plural. Specifically, the word "a" or "an" may refer to one, or one or more, unless the context indicates otherwise.

The term "visual appearance" or briefly "appearance" is to be understood broadly as the way in which an object reflects and transmits light, including but not limited to, how individuals viewing the object perceive color and surface texture of the object in various viewing conditions. Appearance also includes instrumented measurements of how an object reflects and transmits light.

One aspect of visual appearance is color. The "color" of an object is determined by the parts of the spectrum of incident white light that are reflected or transmitted without being absorbed. The color of an object can be described by "color values" in an arbitrary color space, e.g. in a trichromatic color space like RGB or CIEXYZ, or in any other color space like HSV, HSL or CIELAB (L*a*b*), or it can be described in the form of spectral data representative of a spectral response of a material to incident light, in arbitrary format.

Another aspect of visual appearance is texture. The term "texture" is to be broadly understood as referring to the spatial variation of appearance across the surface of the material, both on a microscopic or mesoscopic scale (i.e., on a scale on which individual structure elements can normally not be discerned by the naked eye) and on a macroscopic scale (i.e., on a scale on which individual structure elements can be discerned by the naked eye). Texture as understood in the present disclosure includes phenomena like graininess, sparkle, and variations of surface topography. Texture can be described by "texture attributes". In the context of the present disclosure, the term "texture attributes" is to be understood broadly as encompassing any form of data that is able to quantify at least one aspect of texture. Examples of texture attributes include global texture attributes such as a global sparkle parameter.

A "spectrophotometer" is a device for determining the reflection and/or transmission properties of a surface or material as a function of wavelength, i.e., the spectral response of an object, under illumination with visible light. Different types of spectrophotometers are known, having different geometries and being optimized for different purposes. Some types of spectrophotometers, called "multi-angle spectrophotometers", are capable of determining spectral information for a plurality of combinations of different illumination and viewing directions. An "imaging spectrophotometer" additionally has imaging capabilities, i.e., it can comprise one or more cameras to take one or more digital images of an object.

An "image" can be an image of an actual sample surface that has been acquired with a digital camera, or it can be a synthesized image. An image can take the form of a two-dimensional array of picture elements ("pixels"), each pixel having one or more pixel values. The pixel value can be representative of reflectance at the location of the pixel at a particular wavelength, averaged over a particular wavelength range, or averaged over all visible wavelengths. Accordingly, in some embodiments, an image can be provided in the form of an array of pixel values. In other embodiments, an image can be provided in compressed form or in a transformed form.

The term "directional illumination" refers to a situation where light is directed from a light source to a measurement spot (also called a measurement area) on a sample surface along a narrow range of illumination directions. Reflected light from the measurement area may be detected by a digital camera along an observation direction. It is to be understood that due to the finite sizes of the light source aperture and of the measurement spot, there is always a finite range of directions along which a light ray can propagate from the light source to the measurement area. The "illumination direction" is to be understood to be the direction along which a light ray propagates from the center of the light source aperture to the center of the measurement spot. The angular range of the directions under which the measurement spot is actually illuminated by the light source may be generally narrow, e.g., less than 10°, preferably less than 8° (as stipulated in standard ATSM 2194-14), or even less than 5°. Likewise, due to the finite size of the camera aperture and of the measurement spot, there is always a finite range of directions along which a light ray can propagate from the measurement spot to the camera and be recorded by the image detector of the camera. The "viewing direction" or "observation direction" is to be understood to be the direction along which a light ray propagates from the center of the measurement spot to the center of the camera aperture. Again, the angular range of the directions of the rays from the measurement spot to the camera aperture may generally be narrow, e.g., less than 10°, preferably less than 8° (as stipulated in standard ATSM 2194-14), or even less than 5°.

The term "specular direction" designates the direction into which light that impinges onto the measurement spot along the illumination direction is reflected by the sample surface by a specular (mirror-like) reflection. The term "aspecular angle" designates the angle between the viewing direction and the specular direction. The aspecular angle may be defined in a plane spanned by the illumination direction and the specular direction. The aspecular angle then is considered positive when measured from the specular direction towards the normal direction of the sample surface. The term "anormal angle" designates an angle between an illumination or viewing direction and a normal of the measurement plane.

An "HSV color space" is an example of a color space having a hue coordinate, a saturation coordinate and an intensity or brightness coordinate. More specifically, the HSV color space may be considered an example of a polar-coordinate representation of the RGB color space. The coordinates hue H, saturation Sv and value V in this color space may be calculated from the RGB values as follows:

$$H' = \begin{cases} \text{undefined}, & \text{if } C = 0 \\ \frac{G-B}{C} \bmod 6, & \text{if } M = R \\ \frac{B-R}{C} + 2, & \text{if } M = G \\ \frac{R-G}{C} + 4, & \text{if } M = B \end{cases}$$

$$H = 60° \times H'$$

$$V = \max(R, G, B) = M$$

$$S_V = \begin{cases} 0, & \text{if } V = 0 \\ \frac{C}{V}, & \text{otherwise} \end{cases}$$

with

$M = \max(R, G, B)$
$m = \min(R, G, B)$
$C = \text{range}(R, G, B) = M - m$

wherein
$R, G, B \in [0,1]$.

Alternative definitions for the transformation from RGB to HSV have been proposed in the literature and may be used as well, the present disclosure not being limited to a particular definition of said transformation.

An "HSL color space" is another example a polar-coordinate representation of the RGB color space. The hue coordinate H may be calculated as for HSV. The coordinates saturation $S_L$ and lightness L may be calculated from the RGB values as follows:

$$L = \text{mid}(R, G, B) = \tfrac{1}{2}(M + m)$$

$$S_L = \begin{cases} 0, & \text{if } L = 1 \text{ or } L = 0 \\ \frac{C}{1-|2L-1|}, & \text{otherwise} \end{cases}$$

"Edge detection" refers to a variety of mathematical methods that aim at identifying edges in a digital image, at which the image brightness changes sharply or has discontinuities.

The term "database" refers to an organized collection of data that can be accessed electronically by a computer system. In simple embodiments, the database can be a searchable electronic file in an arbitrary format. Examples include a Microsoft Excel™ spreadsheet or a searchable PDF document. In more sophisticated embodiments, a database can be a relational database that is maintained by a relational database management system using a language like SQL.

The term "computer" or "computing device" refers to any device that can be instructed to carry out sequences of arithmetic or logical operations automatically via a program. Without limitation, a computer can take the form of a desktop computer, a notebook computer, a tablet computer, a smartphone, a programmable digital signal processor etc. A computer generally includes at least one processor and at least one memory device. A computer may be a subunit of another device, such as an appearance capture device. A computer may configured to establish a wired or wireless connection to another computer, including a computer for querying a database. A computer can be configured to be coupled to a data input device like a keyboard or a computer mouse and/or to a data output device like a display or a printer via a wired or wireless connection.

A "processor" is an electronic circuit which performs operations on an external data source, in particular, a memory device.

A "memory device" or briefly "memory" is a device that is used to store information for use by the processor. The memory device may include volatile memory, as for random-access memory (RAM), and nonvolatile memory, as for read-only memory (ROM). In some embodiments, the memory device may include a non-volatile semiconductor memory device such as an (E)EPROM or a flash memory device, which may take the form of, e.g., a memory card or a solid-state disk. In some embodiments, the memory device may include a mass storage device having mechanical components, like a hard disk. The memory device can store a program for execution by the processor. A non-volatile memory device may also be called a non-volatile computer-readable medium.

A "program" is a collection of instructions that can be executed by processor to perform a specific task.

A "wired connection" is a connection via an electrical conductor. A wired connection can include one or more cables. A "wireless connection" is a connection that includes the electromagnetic transfer of information between two or more points that are not connected by an electrical conductor. Wireless connections include connections via WiFi™, Bluetooth™, 3G/4G/5G mobile networks, optical communications, infrared, etc.

Exemplary multi-angle spectrophotometer with imaging capabilities

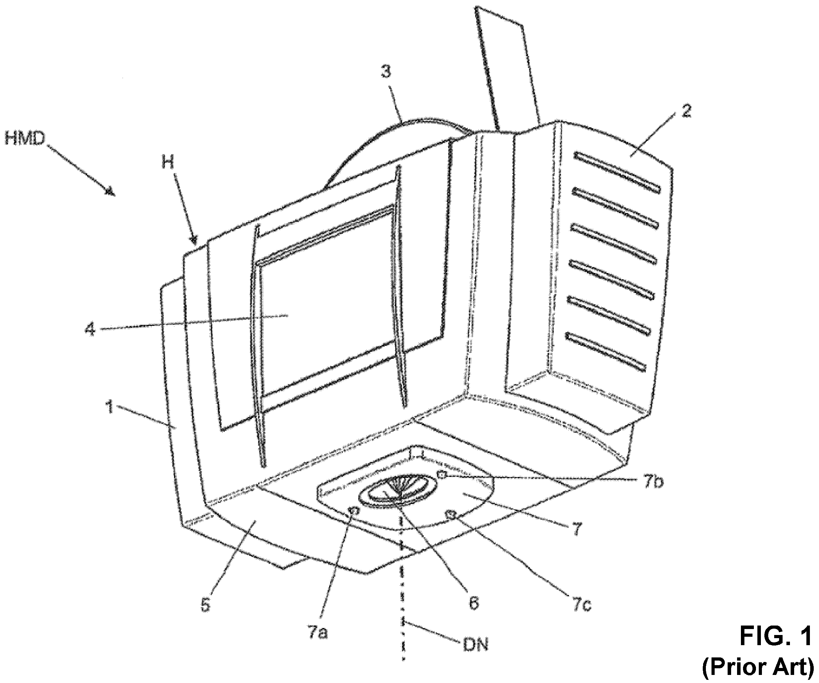

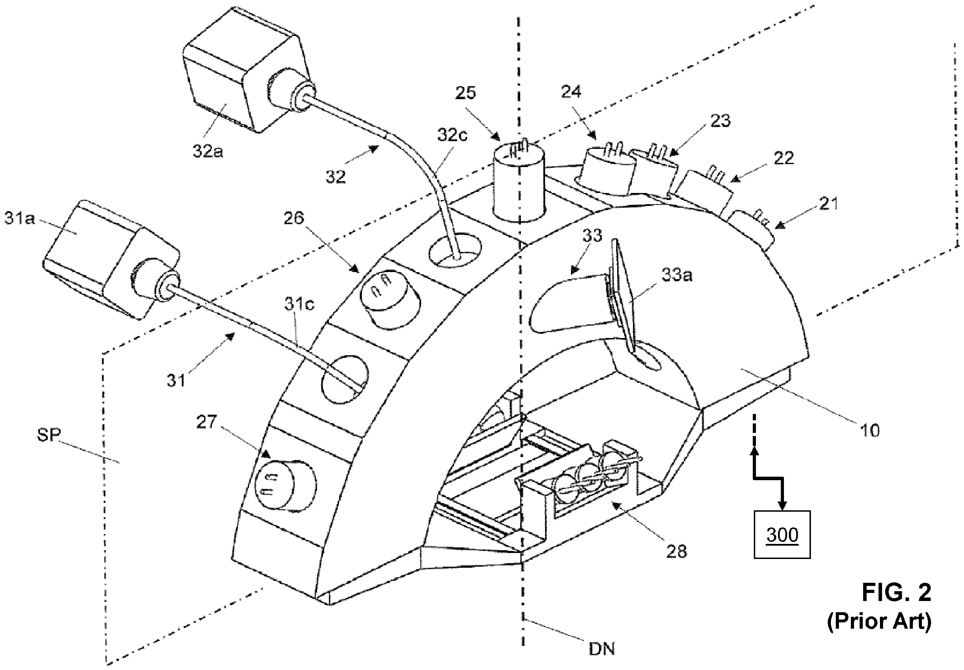

An exemplary handheld measuring device that may be used in the context of the present disclosure is illustrated in Figs. 1 and 2. The handheld measuring device of Figs. 1 and 2 is a multi-angle spectrophotometer with imaging capabilities, as described in greater detail in document US20140152990A1, the contents of which are incorporated herein in their entirety by reference for teaching a hand-held multi-angle spectrophotometer having imaging capabilities. However, the present invention is not limited to any particular type of handheld measuring device, and any handheld measuring device that includes at least one light source and at least one camera with an image detector may be used.

The handheld measuring device that is illustrated Figs. 1 and 2 is configured for capturing the appearance of a surface of a measurement object, in the following referred to as the "sample surface". In the following, the term "measurement array" is understood to mean the sum of the components of the handheld measuring device which serve to illuminate a measurement area on the sample surface, to capture light reflected from this measurement area and to convert it into corresponding electrical signals. The term "device normal" is understood to mean an imaginary straight line which is fixed relative to the device and extends essentially through the center point of the measurement opening and is perpendicular to the sample surface when the measurement device is positioned on a planar sample surface. The plane of the measurement opening usually lies parallel to the measurement spot on the sample surface, such that the device normal is also perpendicular to the measurement opening. The term "vertical" is understood to mean the direction of the device normal. Accordingly, "vertical sections" are to be understood to mean planar sections in a plane that contains the device normal or is parallel to the device normal. In the following description of the measurement device, directions and/or angles are relative to the device normal, which is spatially fixed with respect to the measurement device.

The hand-held measurement device shown in Fig. 1 is indicated as a whole by the reference sign HMD. It comprises a housing H which accommodates the measurement array, and electronic control circuitry (symbolically indicated in Fig. 2 by the box that carries reference sign 300), which controls and reads out the measurement array and analyzes the signals received from the measurement array. Two gripping parts 1 and 2 are embodied laterally on the housing H. A wrist strap 3 is arranged on the upper side of the housing H. A display 4 is provided on the front side of the housing H. Operating members (not shown) are arranged on the upper side of the housing H.

The lower side of the housing H comprises a housing base 5 reinforced by a base plate 7, which is provided with a measurement opening 6. The housing base 5 comprises an aperture (not indicated by a reference sign) in the region of the measurement opening 6, such that light can exit the interior of the housing through the aperture and the measurement opening 6 and, conversely, light from outside can enter the interior of the housing through the measurement opening 6 and the aperture. Three support members 7a , 7b and 7c are arranged around the measurement opening 6 on the base plate 7 and help in enabling the measurement device to be correctly positioned even on curved measurement surfaces, such that the device normal perfectly or at least approximately coincides with the normal of the sample surface in the center point of the measurement spot.

The device normal is indicated in Fig. 1 by the reference sign DN. It is perpendicular to the base plate 7 and extends through the center point of the measurement opening 6.

The setup of the measurement array is illustrated in Fig. 2. It comprises an arc body 10 which is fixedly held in the housing H and in which optical and/or photoelectric components of the measurement array are arranged. In the exemplary embodiment shown, these components comprise seven directional illumination systems 21, 22, 23, 24, 25, 26, and 27, and three detectors (pick-up means) 31, 32, and 33 . Additionally, a diffuse illumination system 28 is also provided in the immediate vicinity of the measurement opening 6.

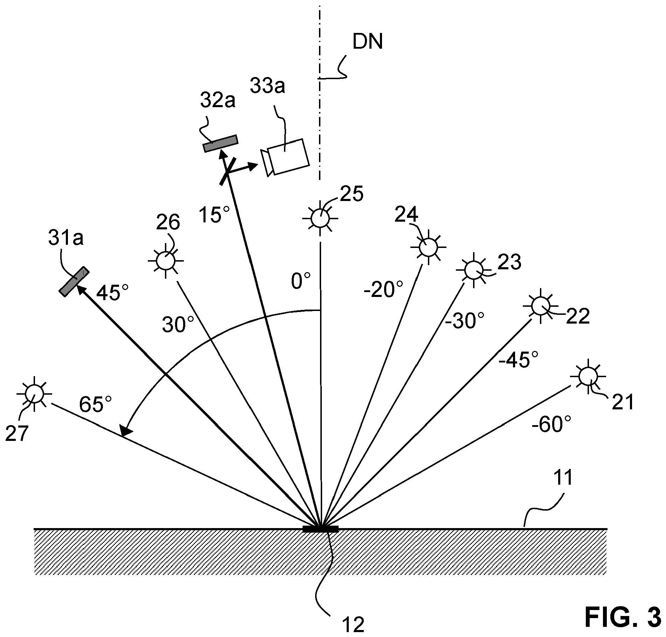

The seven directional illumination systems 21-27 illuminate the measurement spot on the sample surface along different fixed illumination directions in relation to the device normal DN. For example, the optical axes of the directional light sources 21 to 27 may be oriented at anormal angles of -60°, -45°, -30°, -20°, 0°, +30° and +65° relative to the device normal, as illustrated in Fig. 3. All seven directional light sources 21 to 27 are arranged such that their optical axes lie in a common plane which contains the device normal DN, in the following referred to as the system plane SP. Each directional light source 21-27 may comprise a white LED and at least one optical component such as one or more lenses to create a collimated or focused beam along the respective illumination direction. Also indicated in Fig. 3 are the sample surface 11 and the measurement spot 12.

Two of the three detectors 31-33 are embodied as spectral measurement channels; the third detector is embodied as a spatially resolved color measurement channel (imaging channel). The detectors receive the measurement light reflected in the region of the illuminated measurement spot of the measurement object at viewing angles of +15° and +45° in the system plane SP. The two detectors 31, 32 that form spectral measurement channels comprise two spectrally resolving detector (e.g., spectrometers) 31a and 32a to which the measurement light is fed by means of lenses and optical fibers 31c and 32c. The detector 33 that forms a spatially resolved measurement channel comprises an image detector in the form of a color-enabled (RGB) camera 33a to which measurement light is applied via a beam splitter and a lens (not shown). The beam splitter is situated in the pick-up beam path of the detector 32 and directs a part of the measurement light at the viewing angle of +15° laterally out of the arc body 10 onto the camera 33a. The detectors 32 and 33 thus share the measurement light and receive it at exactly the same viewing angle.

The measurement geometries are the reverse of ASTM E2194-14 (2017) and ASTM E2539-14 (2017), in which two specular illuminations at 15° and 45° and six specular spectral channels at 0°, 30°, 65°, -20°, -30° and -60° are defined for measurements on metallic and pearlescent effect pigments, with one additional directional light source 22 at angle -45° for measuring gloss in combination with the pick-up means 31.

The two spectrometers 31a and 32a spectrally resolve the measurement light fed to them at the viewing angles 45° and 15°, respectively, and respectively produce a set of spectral measurement values per measurement, each measurement value corresponding to intensity in a different wavelength range. The spectrometers 31a, 32a do not spatially resolve the measurement light, i.e., they spectrally resolve the entire measurement light that they receive.

The RGB camera 33a resolves the measurement light fed to it at the viewing angle 15° both spatially and spectrally. Spectral resolution is limited to three channels according to the three colors RGB. The RGB camera correspondingly produces a raw dataset of 3*n measurement values per measurement, wherein n is the number of resolved pixels.

The diffuse illumination system 28 is provided so that the measurement device also supports a measurement mode with diffuse illumination conditions. The diffuse illumination system 28 is configured as an LED background illumination which illuminates the measurement object directly from a comparatively large solid angle. It comprises two rows of white light sources in the form of light-emitting diodes arranged on both sides of the measurement opening 6 and two inclined diffusor films, each assigned to one row, for homogenizing the illumination. The two rows of LEDs can be separately controlled by the control circuitry 300.

The measurement device enables the acquisition of "directional images" of the measurement surface for one fixed viewing direction under illumination from seven different illumination directions, as well as the acquisition of "diffuse images" of the measurement surface for one fixed viewing direction under diffuse illumination. The directional images are often analyzed to determine texture attributes of the sample surface. In contrast, the diffuse images are often used for preview purposes only, providing a realistic impression of the visual appearance of the measurement spot under diffuse illumination conditions, e.g., under an overcast sky.

However, not all multi-angle imaging spectrophotometers comprise a diffuse illumination system. In such cases, it is not possible to provide a realistic preview image under diffuse illumination conditions. The present disclosure addresses this shortcoming.

Exemplary embodiment of a method according to the present disclosure

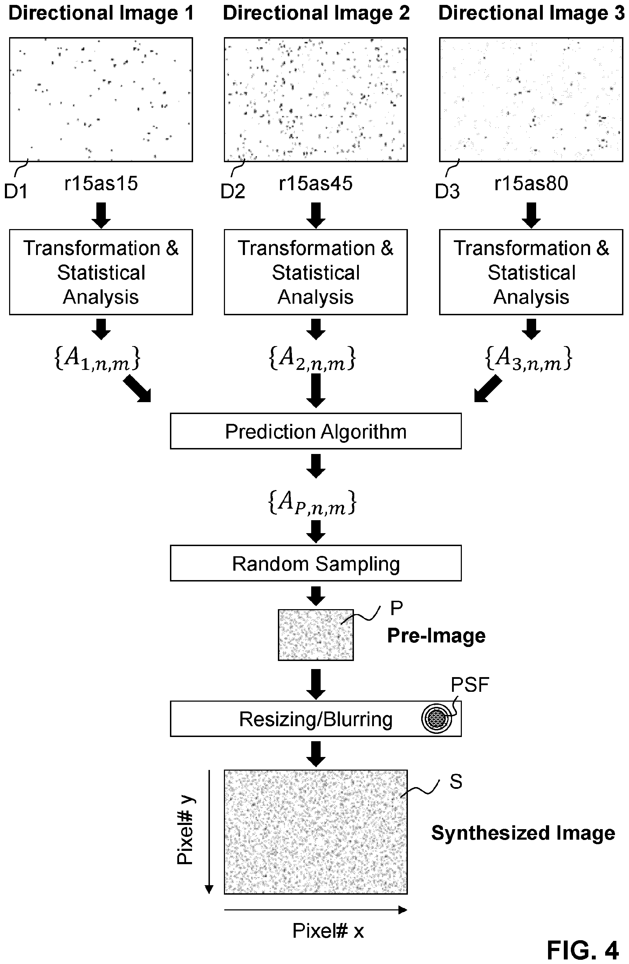

Figure 4 illustrates an exemplary embodiment of a method according to the present disclosure.

Initially, images D1, D2, D3 of a measurement spot under directional illumination ("directional images") are obtained for three different measurement geometries. For example, the directional images may have been acquired using an imaging multi-angle spectrophotometer as discussed above in conjunction with Figures 1-3 and may be retrieved from a memory of the imaging multi-angle spectrophotometer. In the present example, the illumination directions for the three directional images are assumed to be at anormal angles of 0°, 30° and 65° relative to the device normal, respectively, and the viewing direction is assumed to be at an anormal angle of 15° within the system plane for all three directional images, i.e., the viewing direction is assumed to be at aspecular angles of 15°, 45° and 80°, respectively. These measurement geometries are designated as r15as15, r15as45, and r15as80, respectively, in accordance with standard practice in colometry.

Each of the directional images D1, D2, D3 may be a color image. In particular, each pixel in each directional image may be represented by three pixel values, each pixel value being a color value for one coordinate of a three-dimensional color space. As will be explained in more detail below, in this case it is advantageous if the images D1, D2, D3 are provided in a color space having a hue coordinate, a saturation coordinate and a brightness coordinate, e.g., an HSV or HSL color space, since for such color spaces statistical correlations between the pixel values for the different color coordinates are generally lower than for RGB. If the directional images have been acquired by an RGB camera, the RGB values may therefore first be transformed into the preferred color space.

Each of the directional images D1, D2, D3 is then statistically analyzed to determine statistical parameters that characterize the statistical distribution of pixel values ("pixel value histograms") in the respective directional image. This is done for each color coordinate $n$ of the color space separately. The resulting statistical parameters for each color coordinate $n$ may be designated as $A_{i,n,m}$, wherein the index $i$ = 1, ..., 3 identifies the measurement geometry, the index $n$ = 1, ..., 3 identifies the color coordinate, the index $m$ = 1, ..., M identifies a particular statistical parameter, and M designates the total number of statistical parameters for each directional image and each color coordinate.

For example, the statistical parameters may be determined as follows. First, histogram data may be generated for the respective image and color coordinate. To this end, the entire range of possible pixel values may be divided into a series of intervals ("bins"), and for each bin the number of pixels whose pixel values that are within the respective bin may be determined. The bins may be specified as consecutive, non-overlapping intervals that may or may not have equal size. For example, for the hue coordinate, which may have a range from 0° to 360°, 360 bins of interval size 1° may be specified, or 180 bins of interval size 2° may be specified, etc. The histogram data may be normalized to have a total area of 1, total area being defined as the sum of the products of interval size and number of pixels for each bin. Next, a predefined probability distribution function (PDF) may be fitted to the histogram data. As will be explained in more detail below, a well-suited PDF is Johnson's SU distribution, which is defined by four parameters. A particularly useful way of determining four statistical parameters that characterize said distribution will also be described below.

The statistical parameters $\{A_{i,n,m}\}$ which have been determined in this manner are then fed to a prediction algorithm, which predicts a set $\{A_{P,n,m}\}$ of predicted probability distribution parameters for a PDF that is predicted to characterize the pixel value distribution of the same measurement spot under diffuse illumination. As will be explained in more detail below, the prediction algorithm may be a machine learning (ML) algorithm that has previously been trained on a suitable training data set.

Next, random sampling is carried out using the predicted PDF to determine the pixel values of a pre-image P. Subsequently, the pre-image P may be resized to obtain the final synthesized image S. To this end, the pre-image P may have smaller size than the final synthesized image S. Resizing causes pixel values of adjacent pixels in the final synthesized image S to obtain a certain degree of short-range correlations to account for the natural graininess in an image under diffuse illumination that is induced by the finite resolving power of the detection optics. This will also be explained in more detail below. Instead of or in addition to resizing, blurring may be applied to the pre-image P to obtain the final synthesized image S. In particular, it is possible to convolve the pre-image with a point-spread function that emulates the response of the camera system in the spectrophotometer to a point object to blur the pre-image P. In this case, the pre-image may have the same size as the final synthesized image. Resizing and blurring may also be combined.

A circular point spread function PSF is schematically shown in Fig. 4 in the form of a two-dimensional contour plot (not to scale). Any suitable PSF can be employed, e.g., an Airy disk or a 2D gaussian function. If a point spread function is employed, its parameters (in particular, a length scale parameter of the PSF, e.g., a virtual aperture size) can readily be determined empirically, e.g., by fitting the short-range correlations in the synthesized images to the short-range correlations of the directional images, as described in more detail below, or by directly measuring the PSF of the camera system of the spectrophotometer using a calibration sample. As the PSF generally exhibits very little inter-instrument variations within instruments of the same model, it may be sufficient to determine the PSF only once for each spectrophotometer model.

Typical pixel value histograms

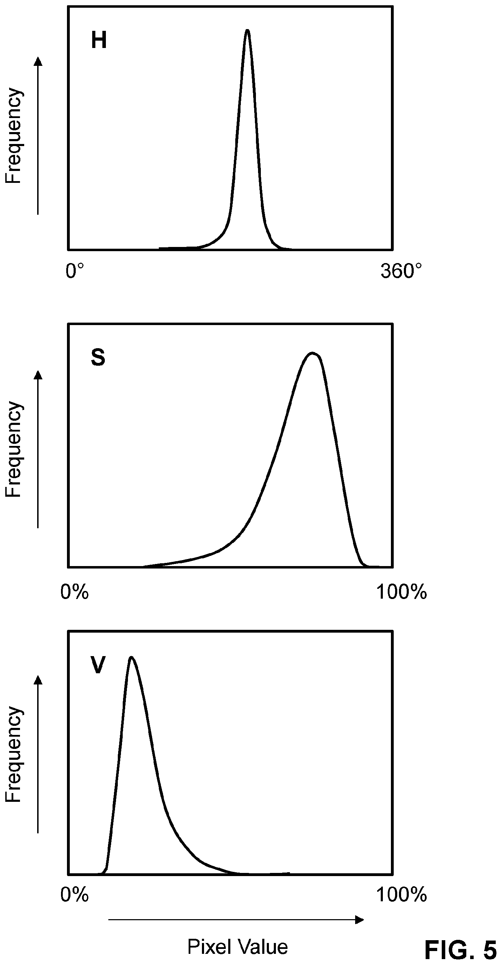

Fig. 5 shows three diagrams illustrating typical statistical distributions of the pixel values of a directional or diffuse image in an HSV color space. For simplicity, the data are represented as a continuous curve rather than as a typical histogram-type diagram. Nevertheless, these diagrams may be considered to represent pixel value histograms. Each of these distributions exhibits a single peak with two independent tails.

Choice of probability distribution function

A good PDF that can be fitted to the histogram data was empirically found to be Johnson's SU distribution, which is a well-known four-parameter distribution looking like a gaussian with two independent heavy tails. Its PDF is defined as follows:

$$z = \gamma + \delta \sinh^{-1}\left(\frac{x - \xi}{\lambda}\right)$$

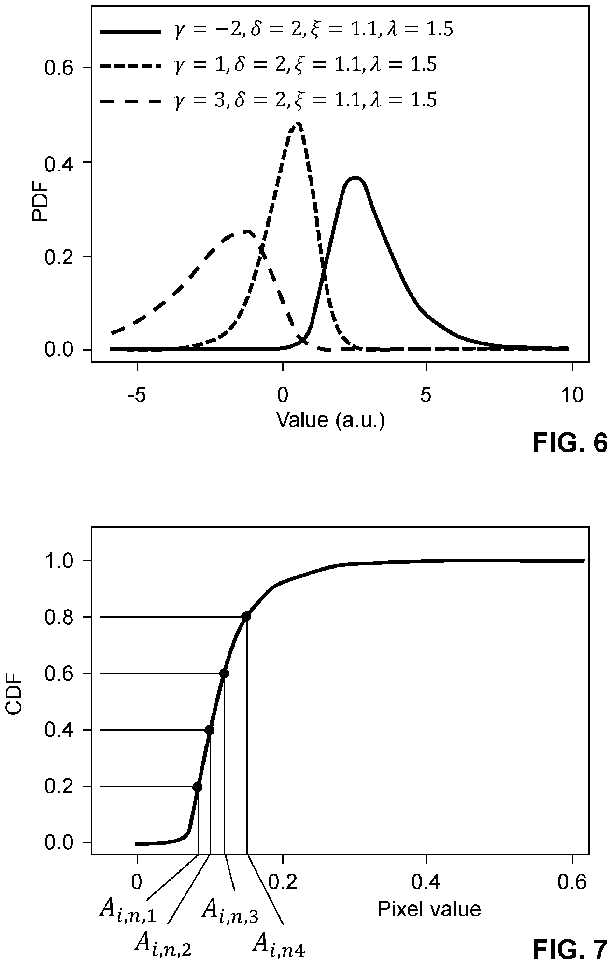

This PDF is illustrated in Fig. 6 for four different sets of parameters $\gamma, \delta, \xi$ and $\lambda$. Johnson's SU distribution is fully specified by these four parameters.

In contrast, a plain gaussian distribution led to inferior results because it has no heavy tails. Also the gamma distribution turned out to be inferior in most cases, as it has no heavy left tail.

Characterizing the probability distribution function

While the parameters $\gamma, \delta, \xi$ and $\lambda$ fully specify Johnson's SU distribution, it has been empirically found that these parameters are not ideal predictors for the subsequent prediction algorithm. For example, they are sensitive to noise or small image variations. Instead, a different approach for characterizing the pixel value histograms was developed, wherein the corresponding cumulative density function (CDF) is considered and percentiles of the CDF are used as predictors. In the following, these percentiles will be called "anchors". As Johnson's SU distribution has four parameters, four "anchors" are able to fully specify this distribution.

The determination of the "anchors" is illustrated in Fig. 7, which shows an exemplary CDF of Johnson's SU distribution, together with the 20%, 40%, 60% and 80% percentiles, which are labeled $A_{i,n,1}$, $A_{i,n,2}$, $A_{i,n,3}$ and $A_{i,n,4}$, respectively. Once a PDF has been fitted to the histogram data, the corresponding CDF and its percentiles or "anchors" can readily be determined and can be directly used as predictors. They are continuous, have well-defined range (e.g., in an HSV color space, the ranges are 0°...360° for H, 0...1 for S and V) and are robust to small perturbations in the inputs. This makes anchors an excellent choice for predictors in a prediction algorithm.

Prediction algorithm

For prediction, a machine learning algorithm (ML algorithm) is advantageously used. Considering that the input and output data are tabular data, a regression algorithm is well suited, in particular, a regression gradient boosting algorithm. In an embodiment, the XGBoost software library was used for implementing the prediction algorithm. The XGBoost model is a robust out-of-the-box ML model that is well suited for tabular data, works well without fine-tuning and is able to accept predictors of different scales. No pre-processing, centering or scaling is required.

For training the algorithm, a training data set containing training data for a large number of surfaces may be used. For each surface, $I \geq 2$ measured directional images and one measured diffuse image may be provided. For each directional image, $M$ anchors (e.g., four anchors) may be determined for each of the $N$ color space dimensions, yielding a total of $N \cdot M \cdot I$ anchors. Likewise, for the diffuse image, $M$ anchors may be determined for each of the $N$ color space dimensions. The $N \cdot M \cdot I$ anchors associated with the directional images may be used as inputs to the prediction algorithm (predictors), and the $N \cdot M$ anchors associated with a diffuse image may be used as target values of the prediction algorithm ("teaching data").

In an embodiment, a database comprising data for 1937 surfaces was used as a training data set. The data for each surface comprised $I = 3$ measured directional images for geometries r15as15, r15as45 and r15as80 and one measured diffuse image for geometry r15d. All images were transformed into the HSV color space, which has $N = 3$ color space dimensions. For each directional image and each color space dimension, $M = 4$ anchors were calculated, yielding a total of $N \cdot M \cdot I = 3 \cdot 3 \cdot 4 = 36$ predictors and $N \cdot M = 12$ targets. The XGBoost model was trained with these training data.

Data for further 194 surfaces were used as a test data. Again, 3 x 3 x 4 =36 anchors were determined for each surface as predictors. Prediction was carried out with the pre-trained XGBoost model to obtain 3 x 4 = 12 anchors for the predicted diffuse image. Based on these anchors, the CDF of Johnson's SU distribution was determined for each color coordinate, and the corresponding PDF was determined. The resulting PDFs were compared to the pixel value histograms of the actual measured diffuse image. A good match was obtained. The PDFs were randomly sampled to create a small 178x133px pre-image, and the pre-image was scaled by a factor of 2.7 to obtain a 480x360px synthesized diffuse image. The synthesized diffuse image was visually compared to the actual measured diffuse image. A good visual match was observed for most surfaces.

Considerations concerning the color space

If one is only interested in black-and-white images (of silver paints, for example), one can carry out the above procedure for only a single color channel, namely, the intensity/brightness channel (e.g. as the average of the RGB channels). The same is true if the directional images exist only as black-and-white images. For example, some known imaging spectrophotometers comprise a black-and-white camera only.

On the other hand, if the synthesized diffuse image is to be a color image, the following considerations as to the choice of a suitable color space apply. In this case, it is not optimal to carry out the above procedure in a trichromatic color space like RGB because for many surface materials the pixel values in the three color channels (i.e., along the three color space dimensions) are correlated. Independently sampling the three color channels may therefore lead to results that do not match reality very well.

It is possible to find a color space in which the pixel values have minimal correlations between the color channels and to transform the directional images into said color space. For example, a principal component analysis (PCA) may be carried out to this end.

However, such a procedure is computationally expensive and may therefore not be desirable in real-time applications. It has been found that in many cases it is sufficient to simply use a color space that has hue, saturation and intensity/brightness coordinates, in particular, an HSV or HSL color space. In such color spaces, the correlations between the color space dimensions are generally much reduced. An additional advantage over a color space obtained by PCA is that the color values can be readily interpreted.

One problem with color spaces that have hue, saturation and brightness coordinates is that the hue coordinate H is generally cyclic, having a range from, e.g., 0° to 360°. Before determining the anchors (i.e., percentiles of the CDF) for the hue coordinate, it should preferably be ensured that these anchors are sufficiently far removed from the 360°→0° border. A simple algorithm for that is as follows: if mode of the H histogram is < 100, then shift the H histogram by $\Delta=+180°$ and take modulo 360°; if the mode is > 260, then shift H histogram by $\Delta=-180°$ and take modulo 360°; otherwise shift by $\Delta=0$. Then determine the anchors for the shifted H histogram. Finally shift the anchors by $-\Delta$ to obtain the anchors of the distribution at the original location. After the prediction and sampling operations, the hue coordinate H of the resulting synthesized image should be taken again modulo 360° to get rid of values < 0° or > 359°. Of course, other possibilities for dealing with the cyclic H coordinate exist.

In practice, the optical system of the camera may induce chromatic aberrations, which in certain situations (e.g., silver paints) may cause the H histogram to appear bimodal even though the "true" H distribution is monomodal. This problem can be mitigated by blurring the H channel (and preferably also the S channel) of the directional images with a kernel having sufficient spatial range to average out the chromatic aberrations.

Pre-Image

In some embodiments, a pre-image is created, which may be a small image (preferably an HDR image) which is later enlarged to the final image size to simulate finite optical resolution. For example, the final image size may be 480x360px, and the size of the pre-image may be 178x133px (corresponding to a scale factor of 2.7). Resizing may be done, e.g., using bicubic interpolation or near-neighbor interpolation. Next-neighbor interpolation is preferred because it does not distort the pixel value histograms of the pre-image in an HSV color space.

In other embodiments, the pre-image may already have the final image size and may be blurred to obtain the final image.

Determining the scale of short-range spatial correlations

Spatial correlations in an image can be simply thought of as "grain size": the larger the grain, the larger the spatial correlations. Grain size, however, does not necessarily correspond to the size of actual features on the sample surface. For example, in the case of an effect pigment containing metallic flakes, "grain size" may be considerably larger than flake size, which generally is in micrometer range. One reason for this is that the optical resolution of the camera is generally too low to resolve very small features on a micrometer scale. Another reason is saturation of the image sensor: specular reflectance from a flake may cause several pixels of the image detector to saturate. In this sense, "grain size" is more related to the brightness of individual sparkle points: the higher the brightness, the larger the sparkle appears.

In the above example, the "grain size" was regulated by a manually tuned scaling parameter of 2.7. In the following, a more systematic way of studying this parameter is presented.

We define a normalized autocorrelation function $R(x,y)$, where $x,y$ are the distances in pixels along the 2D image directions, as the real part of the inverse 2D Fourier transform of the squared absolute value of the 2D Fourier transform of the standardized V image channel (for an HSV color space) or, in more general terms, of the brightness coordinate V of the color space:

$$R_{unnormalized}(x,y) = Re\ IFFT2D\left(\left|FFT2D(V_{standardized}(x,y))\right|^2\right),$$

$$V_{standardized}(x,y) = \frac{V(x,y)\ -\ E[V]}{std\ V},$$

$$R(x,y) = \frac{R_{unnormalized}(x,y)}{\max R_{unnormalized}},$$

where "std" stands for the standard deviation, and E[V] stands for the expectation (mean) value of V.

The autocorrelation function of a randomly sampled pre-image is zero from the first pixel onward, since all image pixels are sampled independently, so there is no spatial correlation whatsoever. In contrast, the autocorrelation function determined for actual measured diffuse images tells us that on average image features ("grains") extend over several pixels.

An autocorrelation parameter can be defined for each image, using the autocorrelation function, and this autocorrelation parameter can be used create spatial correlations in the synthesized diffuse image, e.g., by resizing or blurring. For example, the autocorrelation parameter can be defined as the average length (measured in pixels) over which the autocorrelation function decays to 1/e, and this length can be used as a resizing factor. For the instrument used in the above example, this length scale is about 2.8 pixels, which explains why scaling the pre-image by a factor of 2.7 led to good results. As another example, the autocorrelation parameter can be the average autocorrelation coefficient at a fixed distance, e.g., at a distance of two pixels.

If the autocorrelation parameter is not known, it can be automatically determined by the prediction algorithm. To this end, an autocorrelation parameter (e.g., average autocorrelation coefficient at two pixels distance) may be determined for each directional image and may be used as an additional input to the prediction algorithm, and the same or a different autocorrelation parameter (e.g., a resizing parameter or a length scale parameter of a PSF used for blurring) of the predicted diffuse image may be one of the outputs of the prediction algorithm. If the prediction algorithm is an ML algorithm, the training dataset should of course include corresponding autocorrelation parameters for measured directional images and corresponding measured diffuse images as well.

Dealing with sparkle spots

Directional images containing sparkle spots may exhibit strong correlations between color coordinates even in a color space with hue, saturation and brightness coordinates like HSV. This can be explained as follows: Sparkle spots are much brighter than the background and have a specific hue (for example, white). That means that for these spots high brightness V is correlated with specific H and S values. This correlation may cause the synthesized diffuse images to appear unrealistic.

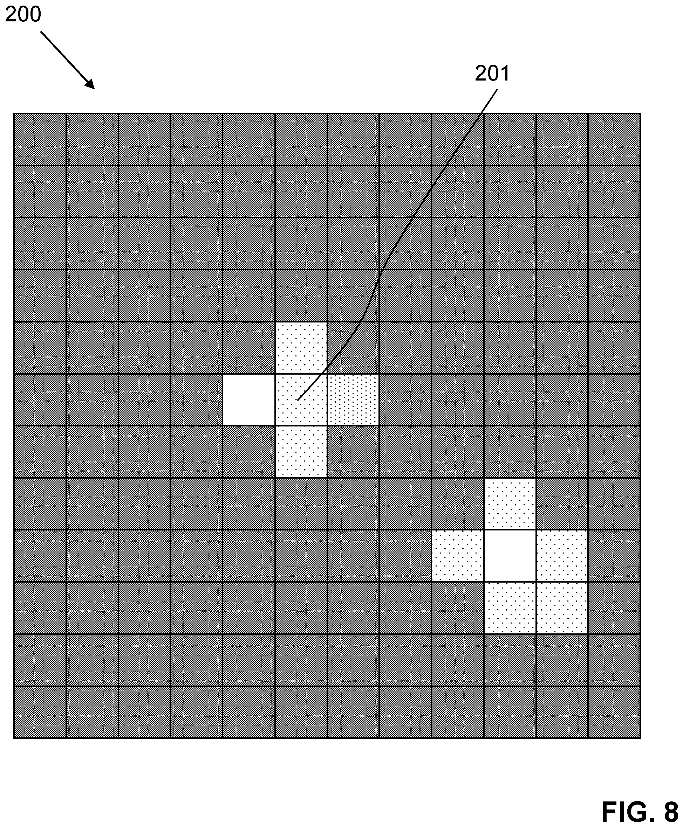

This can be mitigated by treating the background image and the sparkle spots separately. To this end, sparkle pixels in the directional images may be identified and separated from background pixels. This may be done, e.g., using a simple thresholding method that considers all pixels with L or V value higher than some threshold as sparkle pixels, or using more sophisticated methods like edge detection. This procedure is illustrated in Fig. 8, which schematically shows a small image patch of a typical directional image. Most pixels have relative low brightness (indicated by dark grey shading in the drawing). Some pixels, however, appear very bright, such as the pixels around pixel 201. These pixels are considered sparkle pixels and are removed from the directional image to create a directional background image.

A "diffuse background image" can then be synthesized using the directional background images. Likewise, an array of synthesized "diffuse sparkle pixels" can be synthesized in the same manner based on the sparkle pixels of the directional images. The synthesized sparkle pixels can then be inserted at random positions into the synthesized diffuse background image.

Exemplary hardware of control circuitry

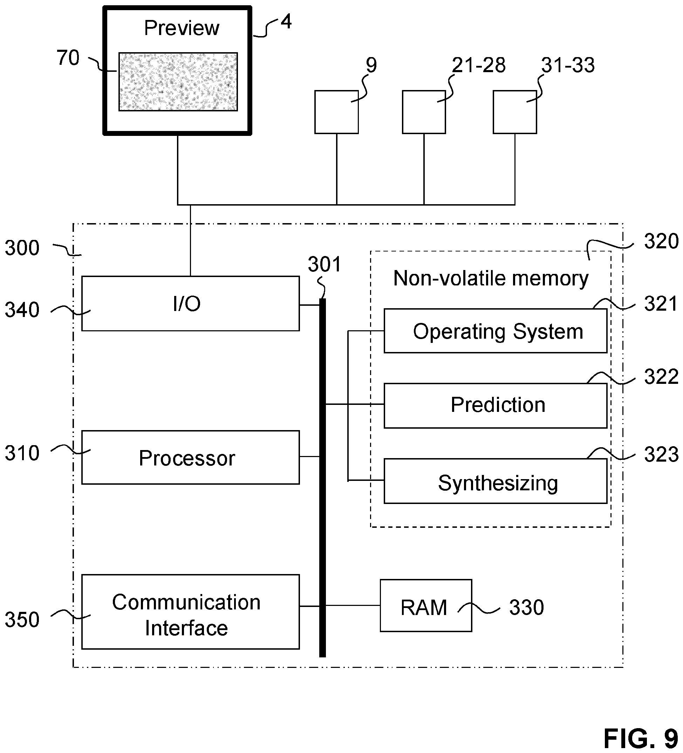

Fig. 9 illustrates a highly schematic functional diagram of the electronic control circuitry 300 in the handheld measuring device of Figs. 1 and 2. A processor 310 communicates via a bus system 301 with a non-volatile (ROM) memory 320, a volatile (RAM) memory 330, an input/output (I/O) interface 340, and a communication interface 350. The non-volatile memory 320 may be, e.g., a flash memory device. It stores, inter alia, an operating system 321 and several application programs, including prediction software 322 for carrying out the prediction operation and image synthesizing software 323 for carrying out the sampling and possibly resizing/blurring operations.

Attached to the input/output interface 340 are the display device 4, one or more control members 9, e.g., in the form of one or more pushbuttons, the light sources of the illumination systems 21-28, and the detectors 31-33.

The communication interface 350 may include, e.g., one or more of an Ethernet interface, a WiFi interface, a Bluetooth™ interface etc. The control circuitry 300 may transmit the directional and/or diffuse images to an external computing device or external display via the communication interface 350.

In other embodiments, the prediction and/or image synthesis steps are carried out by external circuitry. In this case, the directional images or the anchors that have been determined for these images are transmitted to the external circuitry via the communication interface 350, and the synthesized diffuse image and/or the predicted parameters of the PDF of the diffuse image are received from the external circuitry via the communication interface 350.

Modifications

The method discussed above in conjunction with Fig. 3 can readily be modified for situations where only two combinations of illumination and viewing directions exist, or for situations where more than three such combinations exist. Such modifications are straightforward.

In the above examples, it was assumed that the measurement device comprises a plurality of directional illumination systems at two or more illumination directions and one single camera at a fixed viewing direction. However, it is also possible to use only one single directional illumination system at a fixed illumination direction and a plurality of cameras at two or more viewing directions. Also combinations with two or more illumination systems and two or more cameras are possible. It may even suffice to provide only one single directional lighting system and one single camera if the lighting system and/or the camera are moveable between two or more orientations relative to the measurement spot. The directional images may then be acquired sequentially in these orientations.

The images do not need to be color images. They may be greyscale images having only one single pixel value per pixel, which pixel value represents the overall intensity of the reflected light in that pixel. For example, the camera in the multiangle imaging spectrophotometer may be a black-and-white camera. In such cases, the synthesized image may also be a greyscale image. In other embodiments, it may be possible to obtain color images by operating the lighting systems to sequentially produce differently colored light, and to acquire images for each color separately.

Instead of fitting a predefined PDF to the histogram data and determining percentiles of the corresponding CDF, it is also possible to directly determine percentiles of cumulative pixel value histogram data. However, in practice, more stable and accurate results may be obtained by first fitting a PDF to the pixel value histograms.

**Claims**

1.  A method for synthesizing a diffuse image (S) that is representative of an appearance of a surface (11) under diffuse illumination, the diffuse image (S) comprising an array of diffuse image pixels, each diffuse image pixel having at least one diffuse image pixel value, the method comprising:

    a) obtaining at least two directional images (D1, D2, D3) of a measurement spot (12) on the surface (11), each directional image (D1, D2, D3) having been acquired along a viewing direction under directional illumination of the measurement spot from an illumination direction, the illumination and/or viewing directions being different between the at least two directional images, each directional image (D1, D2, D3) comprising an array of directional image pixels, each directional image pixel having at least one directional image pixel value;

    b) for each directional image (D1, D2, D3), determining a plurality of statistical parameters ($\{A_{1,n,m}\}, \{A_{2,n,m}\}, \{A_{3,n,m}\}$) that are representative of a statistical distribution of the directional image pixel values in the respective directional image (D1, D2, D3);

    c) predicting a plurality of probability distribution parameters ($\{A_{P,n,m}\}$), the probability distribution parameters ($\{A_{P,n,m}\}$) being representative of a predicted probability distribution function of the diffuse image pixel values, using the statistical parameters ($\{A_{1,n,m}\}, \{A_{2,n,m}\}, \{A_{3,n,m}\}$) associated with the at least two directional images as predictors;

    d) determining the diffuse image pixel values based on sampling from the predicted probability distribution function.

2.  The method of claim 1, wherein determining the statistical parameters ($\{A_{1,n,m}\}, \{A_{2,n,m}\}, \{A_{3,n,m}\}$) comprises fitting a probability distribution function that has one maximum and two independent tails, in particular, Johnson's SU distribution, to the directional image pixel values in each directional image (D1, D2, D3), and determining the statistical parameters based on the thus-obtained probability distribution function.

3. The method of claim 1 or 2,

   wherein for each directional image (D1, D2, D3), at least four statistical parameters ($\{A_{1,n,m}\}, \{A_{2,n,m}\}, \{A_{3,n,m}\}$) are determined,

   wherein the statistical parameters ($\{A_{1,n,m}\}, \{A_{2,n,m}\}, \{A_{3,n,m}\}$) are preferably percentiles of a cumulative density function that represents the statistical distribution of the directional image pixel values in the respective directional image (D1, D2, D3).

4. The method of any one of the preceding claims, wherein determining the diffuse image pixel values comprises applying a noise model to create spatial correlations in the diffuse image (S).

5. The method of any one of the preceding claims, wherein determining the diffuse image pixel values comprises:

   d1) synthesizing a pre-image (P) having a plurality of pre-image pixels, wherein for each pre-image pixel, a pre-image pixel value is calculated, wherein calculation of the pre-image pixel value comprises random sampling from the predicted probability distribution function; and

   d2) determining the diffuse image pixel values from the pre-image pixel values in such a manner that spatial correlations between the diffuse image pixel values are induced.

6. The method of claim 5, wherein determining the diffuse image pixel values from the pre-image pixel values comprises:

   resizing the pre-image (P) or an image derived therefrom by a resizing factor to obtain the diffuse image (S); and/or

   applying a blurring operation to the pre-image (P) or an image derived therefrom to obtain the diffuse image (S), in particular, by convolving the pre-image (P) with a point spread function (PSF).

7. The method of any one of claims 4-6, comprising:

   for each of the directional images (D1, D2, D3), determining at least one spatial autocorrelation parameter; and taking the spatial autocorrelation parameters of the directional images (D1, D2, D3) into account when determining the diffuse image pixel values,

   wherein the method preferably comprises predicting a spatial autocorrelation parameter of the diffuse image and determining the diffuse image pixel values using said spatial autocorrelation parameter of the diffuse image.

8. The method of any one of the preceding claims,

   wherein each diffuse image pixel has at least three diffuse image pixel values, each diffuse image pixel values being a color value in a color space having at least three color space dimensions (H, S, V),

   wherein each directional image pixel has at least three directional image pixel values, each directional image pixel value being a color value in said color space,

   wherein steps a) and b) are carried out for each of the color space dimensions (H, S, V) separately, and

   wherein prediction of the probability distribution parameters ($\{A_{P,n,m}\}$) is carried out for all color space dimensions (H, S, V) together.

9. The method of claim 8,

   wherein the directional images are obtained in a first color space, in particular, a trichromatic color space, and wherein the method comprises:

   transforming the directional image pixel color values into a second color space in which the directional image pixel color values have reduced correlations between different color space dimensions as compared to the first color space,

   in particular, wherein the second color space has a hue dimension (H), a saturation dimension (S) and an intensity or brightness dimension (V),

   more particularly, wherein the color space is an HSV or HSL color space.

10. The method of claim 8 or 9, comprising:

    carrying out a correlation analysis of the directional image pixel values along the different color space dimensions in the first color space to determine the second color space as a color space that minimizes correlations between the directional image pixel color values along different color space dimensions of the second color space.

11. The method of any one of the preceding claims, comprising:

   determining sparkle pixels (201) in the directional images, the sparkle pixels being representative of sparkle spots;
   removing the sparkle pixels (201) from the directional images to obtain directional background images;
   carrying out steps a) to d) using the directional background images to obtain a synthesized diffuse background image; and
   optionally, inserting simulated sparkle spots into the diffuse background image.

12. The method of any one of the preceding claims, wherein the probability distribution parameters are predicted using a machine-learning algorithm that has been trained using a training data set comprising, for each of a plurality of surfaces, statistical parameters for at least two measured directional images (D1, D2, D3) and one measured diffuse image,
   wherein the machine-learning algorithm preferably is a regression algorithm, in particular, a regression gradient boosting algorithm.

13. A computer program comprising instructions which, when the program is executed by a computer, cause the computer to carry out the method of any one of the preceding claims.

14. An imaging spectrophotometer comprising:

   at least one directional light source (21-27) for illuminating a measurement spot (12) on a sample surface (11) from at least one predefined illumination direction;
   at least one image detector (33a) for acquiring images of the measurement spot (12) along a predefined viewing direction; and
   processing circuitry configured to carry out the method of any one of claims 1-12.

FIG. 1
(Prior Art)

FIG. 2
(Prior Art)

FIG. 3

**Directional Image 1**　　**Directional Image 2**　　**Directional Image 3**

D1　r15as15　　　D2　r15as45　　　D3　r15as80

Transformation & Statistical Analysis　　Transformation & Statistical Analysis　　Transformation & Statistical Analysis

$\{A_{1,n,m}\}$　　　$\{A_{2,n,m}\}$　　　$\{A_{3,n,m}\}$

Prediction Algorithm

$\{A_{P,n,m}\}$

Random Sampling

P / **Pre-Image**

PSF

Resizing/Blurring

S / **Synthesized Image**

Pixel# y

Pixel# x

**FIG. 4**

FIG. 5

FIG. 6

FIG. 7

FIG. 8

**FIG. 9**

**EUROPEAN SEARCH REPORT**

Application Number

EP 23 18 6841

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIN S ET AL: "Estimation of diffuse and specular appearance", COMPUTER VISION, 1999. THE PROCEEDINGS OF THE SEVENTH IEEE INTERNATION AL CONFERENCE ON KERKYRA, GREECE 20-27 SEPT. 1999, LOS ALAMITOS, CA, USA,IEEE COMPUT. SOC, US, vol. 2, 20 September 1999 (1999-09-20), pages 855-860, XP010350561, ISBN: 978-0-7695-0164-2 * abstract * * section 2.1 * | 1-14 | INV. G06T11/00 G01J3/02 G01J3/50 |
| A | US 2014/152990 A1 (EHBETS PETER [CH] ET AL) 5 June 2014 (2014-06-05) * the whole document * | 1-14 | |

TECHNICAL FIELDS SEARCHED (IPC)

G06T
G01J

The present search report has been drawn up for all claims

| Place of search | Date of completion of the search | Examiner |
|---|---|---|
| Munich | 19 December 2023 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 18 6841**

This annex lists the patent family members relating to the patent documents cited in the above-mentioned European search report.
The members are as contained in the European Patent Office EDP file on
The European Patent Office is in no way liable for these particulars which are merely given for the purpose of information.

**19-12-2023**

| Patent document cited in search report | Publication date | Patent family member(s) | Publication date |
|---|---|---|---|
| US 2014152990 A1 | 05-06-2014 | CN 103808666 A | 21-05-2014 |
| | | CN 108051374 A | 18-05-2018 |
| | | EP 2728342 A1 | 07-05-2014 |
| | | EP 2930494 A1 | 14-10-2015 |
| | | KR 20140058389 A | 14-05-2014 |
| | | US 2014152990 A1 | 05-06-2014 |
| | | US 2018024005 A1 | 25-01-2018 |
| | | US 2019049304 A1 | 14-02-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140152990 A1